# EUROPEAN PATENT SPECIFICATION

(11) **EP 3 506 769 B1**
(45) Date of publication and mention of the grant of the patent: **13.05.2020**
(21) Application number: 17758515.5
(22) Date of filing: 25.08.2017
(51) Int. Cl.: A23L 29/10, A23P 10/47, A23L 5/44

(54) **WATER-DISPERSIBLE COLOURING COMPOSITION**
WASSERDISPERGIERBARE FÄRBUNGSZUSAMMENSETZUNG
COMPOSITION COLORANTE DISPERSIBLE DANS L'EAU

(30) Priority: 31.08.2016 EP 16186482
(43) Date of publication of application: 10.07.2019
(73) Proprietor: Chr. Hansen Natural Colors A/S, 2970 Hørsholm (DK)
(72) Inventor: FRECKER, Susan, Milwaukee Wisconsin 53222 (US); KOEHLER, Klaus, 1820 Frederiksberg (DK); NAUD, Juliette, 2000 Frederiksberg (DK)
(86) International application number: PCT/EP2017/071414
(87) International publication number: WO 2018/041730

(56) References cited:
- WO-A1-03/034841
- WO-A1-2014/033703
- JP-A- 2008 063 476
- US-A1- 2011 177 202

## Description

### FIELD OF INVENTION

The present invention relates to a water-dispersible composition comprising a composition comprising a dispersion of carotenoid pigment in combination with a formulation comprising a curcumin pigment.

### BACKGROUND OF THE INVENTION

Coloring agents containing natural or synthetic coloring substances are commonly used as additives in the manufacturing of food products and pharmaceutical products.
The commercially available coloring agents can contain synthetic substances including substances that are normally referred to as dyes or azodyes, or such agents can contain pigments or other coloring substances of natural origin, e.g. in the form of plant material containing a coloring substance, or as more or less purified coloring substances separated from plant, animal or microbial materials naturally containing such substances.

Occasionally, food grade or pharmaceutically acceptable colorings agents are provided that contain coloring substances in the form of synthetic or artificial compounds having substantially the same chemical composition as natural occurring coloring agents. These types of coloring agents are also referred to in the art as "nature identical" colors.
In the present context, the expressions "naturally occurring coloring agents" and "natural pigments" also include "nature identical" colors.

Natural pigments or nature-identical pigments may be water soluble or water insoluble. The present invention relates to water insoluble pigments.

Any of the above types of available coloring agents including agents comprising food grade or pharmaceutically acceptable natural coloring substances can be water soluble, sparingly soluble in water and aqueous media or essentially water-insoluble. A water soluble coloring material or substance as such requires that the product to be colored has an aqueous phase in which the coloring substance is soluble.

However, it may be desirable to obtain the color tone of a particular coloring substance that is insoluble or sparingly soluble in an aqueous phase or a mixture of such substances in a food product or a pharmaceutical product that does not comprise a phase in which the coloring substance is sufficiently soluble to provide the desired coloring. There is therefore a continuous industrial need for coloring agents containing coloring substances that are water insoluble or sparingly insoluble in water, which are in the form of water-miscible or water dispersible compositions having a high coloring efficiency.

Carotenoids which have yellow, orange or red colors occur widely in nature and important sources are plants including grasses, the annatto tree, citrus species, *Capsicum annum*, *Crocus sativus* flowers and marigold flowers, marine algae, yeast and some animals. Carotenoids can be divided into the following classes: carotenoid hydrocarbons, xanthophylls and apocarotenoids. Typical examples of carotenoids include bixin, *β-*carotene, apocarotenals, canthaxanthin, saffron, crocin, capsanthin and capsorubin occurring in paprika oleoresin, lutein, astaxanthin, rubixanthin, violaxanthin, rhodoxanthin, lycopene and derivatives hereof.

Carotenoids are generally understood to be essentially water-insoluble or sparingly soluble in water.

The working Examples of US2011/177202A1 application describe coloring compositions comprising paprika oleoresin (carotenoid natural pigment) and the emulsifiers, polysorbate and "citric acid ester of mono- and diglycerides of edible fatty acids (E472c)". As known in the art and also explained in paragraph [0020] of the US application - paprika oleoresin is an oil-soluble extract of paprika that contains carotenoids such as capsanthin, capsorubin and β-carotene - accordingly, paprika oleoresin is oil with dissolved carotenoids.

Accordingly, the coloring compositions made in the working examples of US2011/177202A1 may be described as oil-in-water (o/w) emulsion color compositions based on oil with dissolved carotenoids (paprika oleoresin) - i.e. liquid oil droplets (comprising dissolved carotenoids) dispersed in water.
According to paragraph [0045] the paprika oleoresin is mixed with emulsifying agents and agitated until completely dissolved to get a homogenous oil phase and an aqueous solution is added to the oil phase to get the oil-in-water (o/w) emulsion, which is homogenized in order to get smaller liquid oil droplets (comprising dissolved carotenoids) dispersed in water.
As understood by the skilled person in the present context - such "liquid oil droplets" are not understood to be "solid particles".

As known in the art - the term "emulsion" is used when both phases, dispersed and continuous, are liquids - i.e. like for example above discussed paprika oleoresin oil-in-water (o/w) emulsion compositions.
A solid-in-water dispersion, wherein the solid particles (e.g. solid beta-carotene particles) are dispersed in the water phase of the solid-in-water dispersion is not understood to be an emulsion.

Accordingly, a paprika oleoresin based oil-in-water (o/w) emulsion as described in the working examples of US2011/177202A1 is not a water-dispersible composition comprising a dispersion of at least 2% (w/w) of carotenoid as the natural pigment in the form of solid particles as discussed herein.

In the working examples of US2011/177202A1 were used at least 5 times more polysorbate than paprika oleoresin - i.e. the ratio (w/w) of polysorbate emulsifier: carotenoid pigment was at least 5:1. In line of this is there in paragraph [0033] explained that it is preferred to use at least 5 times more polysorbate than coloring pigment. For herein relevant commercial use, this may be seen as a too high amount of used polysorbate - one reason for this relates to that polysorbate may be said to have an unwanted unpleasant taste (see e.g. WO2013/167644A1).

Paragraph [0047] of US2011/177202A1 reads: "If only polysorbate 60 is used as the emulsifying agent, the solution consisting of the composition and the lemonade medium becomes macroscopically inhomogeneous" - accordingly use of polysorbate as such did not work properly at the low pH of the lemonade medium.

The working examples of WO2014/033703A1 application describe solid-in-water dispersions comprising β-carotene pigment solid particles dispersed in an aqueous phase comprising different not polysorbate emulsifiers - the term "polysorbate" is not mentioned at all in the WO application. The relevant working examples use sugar ester as emulsifier and such sugar ester may be considered relatively acid labile and therefore not very stable at low pH values.

CN102652732A discloses the preparation of nanoscale water-soluble emulsions, with a particle size of 100-600 nm, by homogenization of carotenoids in an aqueous medium also comprising emulsifiers such as tween (polysorbate) or polyglycerol ester of fatty acid, and a hydrocolloid. The active compound (e.g. a carotenoid) is dissolved in an organic solvent/emulsifier (see e.g. Example 3) and the pigment is therefore not in the form of solid particles.

US2013/337024A1 describes oil-in-water (o/w) emulsion color compositions based on oil with dissolved carotenoids (e.g. lycopene - see [0250]) - i.e. liquid oil droplets (comprising dissolved carotenoids) dispersed in water.

Since edible products, due to consumer taste preferences, extended shelf life etc., often have a low pH, the provision of new food grade coloring agents which are stable at low pH is highly desired.
Especially, water-dispersible coloring compositions/products based on water-insoluble carotenoid natural pigments, which do not precipitate at a pH below 4, are desired - e.g. to be used for coloring a soft drink.

### SUMMARY OF THE INVENTION

The problem to be solved by the present invention relates to the provision of a novel carotenoid (e.g. bixin or beta-carotene) water-dispersible coloring composition with a relatively high concentration of water-insoluble carotenoid pigment and which does not precipitate at a pH below 7 and therefore may e.g. be used for coloring a soft drink.

The solution is based on that the present inventors identified that polysorbate is a particular useful emulsifier in order to make a concentrated (i.e. with high coloring power) carotenoid pigment solid-in-water dispersion product, wherein the solid carotenoid pigment particles are stably dispersed as small solid particles (e.g. size of less than 1 µm) in the water phase and which do not precipitate at a pH below 7 and therefore may e.g. be used for coloring a soft drink.

A carotenoid pigment such as e.g. bixin may have an orange color tone - if a more yellow color tone is wanted, the inventors have identified that this may be obtained by using curcumin color pigment. Said in other words, one may obtain the orange/yellow color tone of interest by using a suitable combination of carotenoid pigment and curcumin pigment composition(s) as described herein - this is illustrated in a working example herein.

The working examples 1 to 5 herein demonstrated that by use of polysorbate as emulsifier, it was possible to make concentrated (strength of at least 10% (w/w)) beta-carotene and bixin pigment solid-in-water dispersion compositions, which e.g. had following positive characteristics:
(i): *stable after storage for 3 months*; since the examples demonstrated that the small average particle size (less than 0.5 µm) of the solid pigment particles were stably maintained during 3 months storage;
(ii): *does not precipitate at a pH below 4*; since a low and stable average particle size was obtained at pH 3.0-3.5.

As known in the art, there is a close link between a low average particle size and a high coloring power (e.g. high color brightness (Chroma)).
Accordingly, the fact that a low and stable average particle size was obtained in the examples demonstrated that a high and stable coloring power was obtained at pH 3.0-3.5.

Working examples herein show that it is possible to obtain a good carotenoid color products even with use of relatively small amounts of polysorbate as emulsifier - for instance in working example 1 was only used half of the amount (w/w) of polysorbate relatively to the amount of beta-carotene - i.e. the ratio (w/w) of polysorbate emulsifier: carotenoid pigment is 1:2.
In beta-carotene working example 3 herein is the ratio (w/w) of polysorbate emulsifier: carotenoid pigment 1:1 (i.e. same amount (w/w) of polysorbate and beta-carotene).
In WO2014/033703A1 (discussed above) were used significantly more emulsifier and the obtained solid-in-water dispersions therefore had a relatively lower color strength.

An advantage of the carotenoid water-dispersible composition as described herein is that they comprise a relatively high pigment concentration (such as e.g. least 5% (w/w)), which gives a more concentrated product. Advantages of a more concentrated product are shorter production process time per kg pigment and less expenses relating to e.g. transportation.

The low concentration of polysorbate water-soluble emulsifier needed in the coloring composition of the present invention to achieve acid stability as well as high tinctorial power assures that costs of production can be kept at a minimum and the inventors have found that no off-taste from the water soluble emulsifier is detectable in the finished colored edible product (e.g. a soft drink).

An advantage of polysorbate as compared to e.g. emulsifiers such as polyglycerol and quillaja is that polysorbate is cheaper than e.g. polyglycerol and quillaja.

Further, in some countries (e.g. Europe and USA) there are some food regulatory legal restrictions in relation to e.g. polyglycerol and quillaja - to the contrary polysorbate is generally allowed to be used for food products in the majority of countries (e.g. Europe and USA).

Accordingly, a first aspect of the present invention relates to a water-dispersible composition comprising:
(1) A dispersion of at least 2% (w/w) of carotenoid natural hydrophobic pigment in the form of solid particles of an average size of at the most 1 µm, said solid particles being dispersed in an aqueous phase comprising polysorbate as a water-soluble emulsifier and wherein the ratio (w/w) of polysorbate emulsifier:carotenoid pigment is in the range of 1:10 to 4:1; and
   wherein the carotenoid natural hydrophobic pigment is at least one pigment selected from the group consisting of: bixin, β-carotene, α-carotene, apocarotenals, canthaxanthin, saffron, crocin, capsanthin, capsorubin, lutein, astaxanthin, rubixanthin, violaxanthin, rhodoxanthin and lycopene;
   in combination with
(2) A water-dispersible formulation comprising a curcumin pigment.

As understood by the skilled person in the present context - the term "in combination with" should be understood as the two color pigments (i.e. carotenoid pigment and curcumin pigment) are used in combination in order to obtain a desired color tone (e.g. desired orange/yellow color tone) of interest in e.g. an edible product.

Accordingly, the term "in combination with" may relate to that the two compositions (i.e. carotenoid dispersion (1) and curcumin formulation (2) of the first aspect) are formulated as independent separate formulations, which are then both added (i.e. in combination) to e.g. an edible product in order to obtain a desired color tone of the edible product.

Alternatively, the two compositions (i.e. carotenoid dispersion (1) and curcumin formulation (2) of the first aspect) may be formulated into a single composition (e.g. one liquid composition in a suitable package (e.g. a bottle)) and this single composition may then be added to an edible product.

A second aspect of the invention relates to the use of a water-dispersible composition according to the first aspect and herein relevant embodiments thereof for the manufacture of an edible product or a pharmaceutical product.

A third aspect of the invention relates to an edible product or a pharmaceutical product comprising a composition according to the first aspect and herein relevant embodiments thereof.

A fourth aspect of the invention relates to a method for preparing a water-dispersible pigment composition of the first aspect and herein relevant embodiments thereof, the method comprising preparing a dispersion of at least 2% (w/w) of carotenoid natural hydrophobic pigment in the form of solid particles by comminuting the pigment in an aqueous phase comprising polysorbate as a water-soluble emulsifier, to obtain a dispersion comprising the pigment in the form of solid particles of an average size of at the most 1 µm and a curcumin comprising formulation and combining the dispersion and the formulation.

### DETAILED DESCRIPTION OF THE INVENTION

The inventors of the present invention have found that a water-dispersible composition of the first aspect and herein relevant embodiments thereof provides a coloring agent with a very high tinctorial power and acid stability compared to conventional coloring agents currently on the market.

The present invention relates to a water-dispersible composition comprising:
(1) A dispersion of at least 2% (w/w) of carotenoid natural hydrophobic pigment in the form of solid particles of an average size of at the most 1
   µm, said solid particles being dispersed in an aqueous phase comprising polysorbate as a water-soluble emulsifier and wherein the ratio (w/w) of polysorbate emulsifier:carotenoid pigment is in the range of 1:10 to 4:1; and
   wherein the carotenoid natural hydrophobic pigment is at least one pigment selected from the group consisting of: bixin, β-carotene, α-carotene, apocarotenals, canthaxanthin, saffron, crocin, capsanthin, capsorubin, lutein, astaxanthin, rubixanthin, violaxanthin, rhodoxanthin and lycopene;
   in combination with
(2) A water-dispersible formulation comprising a curcumin pigment.

### The dispersion comprising a carotenoid pigment

The water-dispersible composition according to the invention comprises at least one carotenoid natural pigment.

As discussed above - occasionally, food grade or pharmaceutically acceptable coloring agents are provided that contain coloring substances in the form of synthetic or artificial compounds having substantially the same chemical composition as natural occurring coloring agents. These types of coloring agents are also referred to in the art as "nature identical" colors.

In the present context, the expressions "naturally occurring coloring agents" and "natural pigments" also include "nature identical" colors.

As known in the art - β-carotene is an example of a pigment that may be obtained directly from a natural source and/or be a so-called nature identical color.

The natural carotenoid pigment can be any food grade or pharmaceutically acceptable coloring matter derived from a natural source. Thus, the pigment may either be in a substantially pure form or it may be contained in the material where it occurs naturally such as a plant or animal material, optionally in combination with a food grade and/or pharmaceutically acceptable carrier.

It is essential that the carotenoid pigments used in the current composition are solid water insoluble pigments.

Hydrophobic pigments are not soluble in water at any pH value.

Carotenoids which have yellow, orange or red colors occur widely in nature and important sources are plants including grasses, the annatto tree, citrus species, *Capsicum annum*, *Crocus sativus* flowers and marigold flowers, marine algae, yeast and some animals. Carotenoids can be divided into the following classes: carotenoid hydrocarbons, xanthophylls and apocarotenoids.

As discussed above in relation to the first aspect - the carotenoid natural hydrophobic pigment is at least one pigment selected from the group consisting of bixin, β-carotene, α-carotene, apocarotenals, canthaxanthin, saffron, crocin, capsanthin, capsorubin, lutein, astaxanthin, rubixanthin, violaxanthin, rhodoxanthin and lycopene.

Bixin will at high pH change to norbixin which is water soluble.

The dispersion as described herein may comprise two or more different carotenoids - for instance 3% (w/w) of bixin and 6% (w/w) β-carotene, which give a composition with 9% (w/w) of carotenoid natural hydrophobic pigment.

Preferably, the carotenoid natural hydrophobic pigment is at least one pigment selected from the group consisting of bixin and β-carotene.

In a particular embodiment the present invention relates to a water-dispersible composition comprising a dispersion of at least 2%, such as at least 3%, such as at least 4%, such as at least 5%, such as at least 6%, such as at least 7%, such as at least 8%, such as at least 9%, such as at least 10%, such as at least 15%, such as at least 20%, such as at least 25% (w/w) based on the dispersion, of carotenoid natural hydrophobic pigment as described above in the form of solid particles of an average size of at the most 1 µm or even less, see the below listed average sizes, said particles being dispersed in an aqueous phase comprising at least one water-soluble polysorbate emulsifier.

In a particular embodiment of the present invention the water-dispersible composition as described herein is comprising a dispersion of less than 50% (w/w), such as less than 40% (w/w), such as less than 37% (w/w), such as less than 35% (w/w), such as less than 30% (w/w) of carotenoid natural hydrophobic pigment based on the dispersion.

In preferred embodiments, the average size of the solid particles is at the most 0.9 µm, such as at the most 0.8 µm, such as at the most 0.7 µm, such as at the most 0.6 µm, such as at the most 0.5 µm, such as at the most 0.4 µm, such as at the most 0.3 µm, such as at the most 0.2. In a particular embodiment of the present invention the average size of the solid particles of the carotenoid pigment is at least 0.1 µm.

In a particular embodiment the present invention relates to a water-dispersible composition comprising at least 2%, such as at least 3%, such as at least 4%, such as at least 5%, such as at least 6%, such as at least 7%, such as at least 8%, such as at least 9%, such as at least 10%, such as at least 15%, such as at least 20%, such as at least 25% (w/w) based on the water-dispersible composition, of carotenoid natural hydrophobic pigment as described above in the form of solid particles of an average size of at the most 10 µm or even less, see the below listed average sizes, said particles being dispersed in an aqueous phase comprising at least one water-soluble polysorbate emulsifier.

In a particular embodiment of the present invention the water-dispersible composition as described herein is comprising less than 50% (w/w), such as less than 40% (w/w), such as less than 37% (w/w), such as less than 35% (w/w), such as less than 30% (w/w) of carotenoid natural hydrophobic pigment based on water-dispersible composition.

In relation to measurement of size of the particles - in working examples herein were used Malvern MasterSizer and there was measured D(4,3). As known in the art - D(4,3) relates to mean diameter by volume (i.e. the same as mass).

Accordingly and as understood by the skilled person in the present context - the average size of the particles relates to D(4,3) measured Malvern MasterSizer.

Polysorbates are a class of emulsifiers used in some pharmaceuticals and food preparation. Polysorbates are oily liquids derived from ethoxylated sorbitan (a derivative of sorbitol) esterified with fatty acids. Common brand names for polysorbates include Scattics, Alkest, Canarcel, and Tween.
As discussed above - polysorbates are very cost-efficient and this is a herein relevant advantage of the use of polysorbate as emulsifier as discussed herein.

The polysorbate may e.g. be polysorbate 20, polysorbate 40, polysorbate 60, polysorbate 65, polysorbate 80 or a mixture of these.
In working examples herein was used polysorbate 80 and it may be a preferred polysorbate.

Suitable examples of polysorbate include polysorbate with E-numbers: E 431, E 432, E 433, E 434, E 435 or E 436.
As known in the art - E-numbers are codes for substances that can be used as food additives for use within the European Union and the E-numbers are not changed over time and E-numbers therefore directly and unambiguously technically define a food additive of interest.

In a preferred embodiment the water-soluble emulsifier is present in the dispersion in an amount of at least 2% (w/w), such as at least 3% (w/w), such as at least 5% (w/w), such as at least 6% (w/w), such as at least 7% (w/w), such as at least 8% (w/w), such as at least 9% (w/w), such as at least 10% (w/w), such as at least 11% (w/w), such as at least 12% (w/w), such as at least 13% (w/w), such as at least 14% (w/w), such as at least 15% (w/w), and such as at least 20% (w/w) based on the dispersion.

In a preferred embodiment the water-soluble emulsifier is present in the dispersion in an amount of at the most 40% (w/w), such as at the most 35% (w/w), such as at the most 25% (w/w), such as at the most 24% (w/w), such as at the most 23% (w/w), such as at the most 22% (w/w), such as at the most 21% (w/w), such as at the most 20% (w/w) based on the dispersion.

In a preferred embodiment the water-soluble emulsifier is present in the dispersion in an amount of 3% (w/w) to 40% (w/w), 5% (w/w) to 35% (w/w), such as 7% (w/w) to 30% (w/w), such as 10% (w/w) to 25% (w/w), such as 12% (w/w) to 24% (w/w), such as 13% (w/w) to 23% (w/w), such as 14% (w/w) to 22%% (w/w), such as at least 15% (w/w) to 20% (w/w) based on the dispersion.

The low concentration of water-soluble emulsifier needed in the coloring composition of the present invention to achieve acid stability as well as high tinctorial power assures that costs of production can be kept at a minimum and the inventors have found that no off-taste from the water soluble emulsifier is detectable in the finished edible product (e.g. a soft drink).

As discussed above in relation to the first aspect - the ratio (w/w) of polysorbate emulsifier:carotenoid pigment is in the range of 1:10 to 4:1, more preferably in the range of 1:10 to 3:1.

As discussed above - working examples herein show that it is possible to obtain good carotenoid color products even with use of relatively small amounts of polysorbate as emulsifier, which is an advantage of the present invention.
Preferably there is not used more polysorbate than required in order to make a water-dispersible composition as described herein.

In a particular embodiment of the present invention the ratio (w/w) of polysorbate emulsifier to carotenoid pigment is in the range of 1:4 to 4:1, such as 1:4 to 3:1 or such as 1:3 to 3:1. In a preferred embodiment of the invention the ratio (w/w) of polysorbate emulsifier:carotenoid pigment is in the range of 1:4 to 2:1, such as 1:2.5 to 2.5:1 or such as 1:2 to 2:1.

The water-dispersible composition as described herein may comprise other types of emulsifier than polysorbate.
However, it is preferred that at least 80% (w/w) of the total amount of emulsifier in the water-dispersible composition is the polysorbate emulsifier, more preferably that at least 90% (w/w) of the total amount of emulsifier in the water-dispersible composition is the polysorbate emulsifier, even more preferably that at least 97% (w/w) of the total amount of emulsifier in the water-dispersible composition is the polysorbate emulsifier and most preferably that essentially all of the total amount of emulsifier in the water-dispersible composition is the polysorbate emulsifier.

Preferably, the pH of the water-dispersible composition, the dispersion comprising the carotenoid and the water dispersible formulation comprising the curcumin is from 1 to 7, more preferably from 2 to 5 and even more preferably from 2.5 to 4. In a most preferred embodiment the pH is from 3.5 to 4.5.

In a particular embodiment the water-dispersible composition as described herein also comprises an antioxidant (such as tocopherols, rosemary extract, ascorbic acid or ascorbates).

In one preferred embodiment the solid particles are being dispersed in the aqueous phase in the absence of a hydrocolloid.

The term "hydrocolloid" as used herein refers to a protective colloid which prevents agglomeration of the pigments and thus provides wetting and dispersing activity. Examples of hydrocolloids include gelatin, gum arabic, beet pectin and starch octenyl succinate derivatives.

Starch octenyl succinate is the common name given to starch n-octenyl succinate which is made by treating starch with n-octenyl succinic anhydride at pH 8-8.5. This type of starch derivative is anionic due to a carboxyl group and hydrophobic due to the C₈- alkene chain. The common E-number of starch sodium octenyl succinate derivatives is E1450 (see EU food additive legislation).

Preferably, the solid particles of the first aspect comprises carotenoid (preferably bixin and/or β-carotene) crystals covered with polysorbate and the solid particles comprise less than 0.5% (preferably 0%) (w/w) of fat, oil or wax.

In a particular preferred embodiment, the water-dispersible composition of the first aspect and herein relevant embodiments thereof is a water-dispersible composition, wherein the water-dispersible composition comprises a dispersion of at least 10% (w/w) of β-carotene as the natural pigment in the form of solid particles of an average size of at the most 1 µm, said particles being dispersed in an aqueous phase comprising polysorbate as the water-soluble emulsifier and wherein the ratio (w/w) of polysorbate emulsifier:β-carotene pigment is in the range of 1:3 to 3:1.

In relation to the embodiment immediately above - it is preferred that:
- the composition comprises at least 12% (w/w) of β-carotene, more preferably at least 14% (w/w) of β-carotene and even more preferably at least 18% (w/w) of β-carotene based on dispersion;
- the ratio (w/w) of polysorbate emulsifier:β-carotene pigment is in the range of 1:2 to 3:1, more preferably in the range of 1:2 to 2:1 and even more preferably in the range of 1:2 to 1.5:1; and/or
- wherein solid particles comprises β-carotene crystals covered with polysorbate and the solid particles comprise less than 0.5% (preferably 0%) (w/w) of fat, oil or wax.

In a particular preferred embodiment, the water-dispersible composition of the first aspect and herein described embodiments thereof is a water-dispersible composition, wherein the water-dispersible composition comprises a dispersion of at least 10% (w/w) of bixin as the natural pigment in the form of solid particles of an average size of at the most 1 µm, said particles being dispersed in an aqueous phase comprising polysorbate as the water-soluble emulsifier and wherein the ratio (w/w) of polysorbate emulsifier:bixin pigment is in the range of 1:3 to 3:1.

In relation to the embodiment immediately above - it is preferred that:
- the composition comprises at least 12% (w/w) of bixin, more preferably at least 14% (w/w) of bixin and even more preferably at least 18% (w/w) of bixin based on the dispersion;
- the ratio (w/w) of polysorbate emulsifier:bixin pigment is in the range of 1:2 to 3:1, more preferably in the range of 1:2 to 2:1 and even more preferably in the range of 1:2 to 1.5:1; and/or
- wherein solid particles comprises bixin crystals covered with polysorbate and the solid particles comprise less than 0.5% (preferably 0%) (w/w) of fat, oil or wax.

As discussed above - a fourth aspect of the invention relates to a method for preparing a water-dispersible pigment composition of the first aspect and herein relevant embodiments thereof, the method comprising preparing a dispersion of at least 2% (w/w) of carotenoid natural hydrophobic pigment in the form of solid particles by comminuting the pigment in an aqueous phase comprising polysorbate as a water-soluble emulsifier, to obtain a dispersion comprising the pigment in the form of solid particles of an average size of at the most 1 µm.

Preferably the comminuting is done by milling, preferably wet milling.

A preferred milling is ball milling.

As understood by the skilled person in the present context - preferred embodiments in relation to a water-dispersible composition of the first aspect may imply corresponding evident preferred embodiments in relation to the fourth aspect of the invention (relating to a method for preparing a water-dispersible pigment composition of the first aspect).

For instance, in relation to the method of the fourth aspect it may be preferred that:
- the pigment is comminuted in an aqueous phase in the absence of a hydrocolloid;
- the polysorbate emulsifier is present in an amount of at least 5% (w/w);
- the ratio of polysorbate emulsifier:carotenoid pigment is in a range of 1:10 to 4:1.

### The second water-dispersible composition comprising a curcumin pigment

Preferably, the water-dispersible composition (2) of the first aspect comprising curcumin pigment is:
a water-dispersible formulation comprising at least 1% (w/w) of curcumin pigment in the form of solid particles of an average size of at the most 10 µm, said solid particles being dispersed in an aqueous phase comprising a dispersant agent.

The curcumin pigment can be any food grade or pharmaceutically acceptable coloring matter derived from a natural source. Thus, the pigment may either be in a substantially pure form or it may be contained in the material where it occurs naturally such as a plant, optionally in combination with a food grade and/or pharmaceutically acceptable carrier.

The term "dispersant agent" should be understood as the skilled person would understand it in the present context. As understood by the skilled person in the present context, a dispersant agent works as dispersant agent in the sense that it stably disperses the solid pigment particles so there is not unwanted sedimentation of the solid pigment particles.

As known to the skilled person - when there is unwanted sedimentation of the solid pigment particles the herein relevant color will be lost.

As known in the art - an emulsifier is an example of a dispersant agent.
A dispersant agent may e.g. also be what in the art sometimes is termed a hydrocolloid. Examples of herein suitable hydrocolloids are gum arabic, locust bean gum, pectin, beet-pectin, gelatin or preferably starch.

A preferred starch is starch octenyl succinate derivative, preferably starch sodium octenyl succinate.
Starch sodium octenyl succinate derivative have the common E-number E1450 (see EU food additive legislation).

In relation to the water-dispersible composition (2) of the first aspect comprising curcumin pigment, it is preferred that the dispersant agent is not polysorbate.

In relation to the water-dispersible composition (2) of the first aspect comprising curcumin pigment, the dispersant agent may e.g. be gum arabic, locust bean gum, pectin, beet-pectin, gelatin or preferably starch.
Preferably, the starch is a starch sodium octenyl succinate derivative.

In relation to the water-dispersible formulation (2) of the first aspect comprising curcumin pigment, it may be preferred that the ratio (w/w) of dispersant agent: curcumin pigment is in the range of 1:1000 to 1000:1. In a particular embodiment of the present invention the ratio (w/w) of dispersant agent starch : curcumin pigment is in the range of to 4:1 to 1:4, such as 3:1 to1:3, such as 2:1 to 1:2.

In a particular embodiment of the present invention the water-dispersible formulation comprises between 1% to 35% (w/w) curcumin if the composition is an aqueous composition. The composition comprises at least 1%, such as at least 2%, such as at least 5%, such as at least 6%, such as at least 10%, such as at least 15% (w/w) of curcumin. In a particular embodiment the formulation comprises up to 35%, such as up 30%, such as up to 25%, such as up to 20%, such as up to 15% (w/w) of curcumin.
If the formulation is a dry powder it comprises at least 40%, such as at least 50%, such as at least 60%, such as at least 70% (w/w), such as at least 80% (w/w), such as at least 90% (w/w), such as at least 95% (w/w) of curcumin.

### The water dispersible composition comprising a carotenoid and a curcumin

The water dispersible composition of the present invention is described as:
A water-dispersible composition comprising:
   (1) A dispersion of at least 2% (w/w) of carotenoid natural hydrophobic pigment in the form of solid particles of an average size of at the most 1 µm, said solid particles being dispersed in an aqueous phase comprising polysorbate as a water-soluble emulsifier and wherein the ratio (w/w) of polysorbate emulsifier : carotenoid pigment is in the range of 1:10 to 4:1; and wherein the carotenoid natural hydrophobic pigment is at least one pigment selected from the group consisting of: bixin, β-carotene, α-carotene, apocarotenals, canthaxanthin, saffron, crocin, capsanthin, capsorubin, lutein, astaxanthin, rubixanthin, violaxanthin, rhodoxanthin and lycopene; in combination with
   (2) A water-dispersible formulation omprising a curcumin pigment.

The ratio of carotenoid to curcumin in the final composition is preferably 10:1 to 1:10, such as 7:1 to 1:7, such as 5:1 to 1:5, such as 2:1 to 1:2, such as 6:1 to 1:3. In a particular embodiment the ratio of carotenoid to curcumin is not 1:1.

In a particular embodiment the carotenoid is bixin and the ratio of bixin to curcumin in the final composition is preferably 10:1 to 1:10, such as 7:1 to 1:7, such as 5:1 to 1:5, such as 2:1 to 1:2, such as 6:1 to 1:3. In a particular embodiment the ratio of bixin to curcumin is not 1:1.

The water-dispersible composition according to the present invention is useful in the manufacture of an edible product or a pharmaceutical product. An edible product may e.g. be a food product or a feed product.

The water-dispersible composition according to the present invention can be used as a colorant for food, feed and/or pharmaceutical products. The composition is particularly useful in low pH applications such as in application where pH of the product is below 7, such as below 6, such as below 4, or even below a pH of 3. Most food products are in the acidic range and a specific useful application includes coloring of beverage products. In beverage products the pH is typically around 2-3 and the beverage product is therefore preferably a beverage product, wherein the pH is from pH 2 to 3.

Preferred examples of a food product are beverage, wine gum, marmalade, jam, sugar confectionary, panned chocolate lentils, sausage casings, pasta, macaroni, cheese, prepared food or extruded foods.

Preferred example of a beverage is soft drink.

Preferably, the food product is a sauce. In a particular embodiment the sauce is a pasta sauce.

In a particular embodiment the present invention relates to a pharmaceutical product comprising a composition according to the above description.

The invention is further illustrated by the following non-limiting examples.

### EXAMPLES

### Example 1: Composition with beta-carotene and polysorbate (component (1) of the claimed composition)

### Composition of milled suspension:

| Ingredient | % | Amount (g) |
|---|---|---|
| Dem. water | 73.8 | 2952 |
| Polysorbate 80 | 7.5 | 300 |
| Ascorbic acid | 3 | 120 |
| K-sorbate | 0.1 | 4 |
| Acetic acid | 0.6 | 24 |
| Beta-carotene crystals | 15 | 600 |
| Citric acid to pH 3.0 - 3.5 | | |

### Ball milling:

The color suspension was milled on a LabStar ball mill (Netzsch, Germany) in two steps.

The particle size of the milled beta-carotene crystals was measured on a Malvern Mastersizer.

During the first milling step the mill was equipped with 450 ml of beads (SiliBeads ZY, Sigmund Lindner GmbH, Germany) with diameters in the range 0.6-0.8 mm and a 0.2 mm slit on the mill.

Milling was continued until all particles with a diameter of above 10 microns had disappeared.

The beads were then exchanged with 450 ml of smaller beads (SiliBeads ZY, Sigmund Lindner GmbH, Germany) with diameters in the range of 0.3-0.4 mm.

Milling was continued until a particle size (d(4,3)) of 0.26 microns was obtained.

After storage for 3 months at 4 °C a mean particle size d(4,3) of 0.28 microns was measured.

The viscosity of the composition was still very low after milling and this was still the case after storage for 3 months at 4 °C

Beta-carotene strength was measured: 12.48%.

0.032 g of the color formulation was dissolved in 250 ml of a standard soft drink medium with a pH value of 3.0 and measured on a Minolta Chromameter, CT310.

Chroma was measured at 96.51, which is a high value.

### Example 2: Composition with crystalline bixin and polysorbate (component (1) of the claimed composition)

### Composition of milled suspension:

| Ingredient | % | Amount (g) |
|---|---|---|
| Dem. water | 73.8 | 2952 |
| Polysorbate 80 | 7.5 | 300 |
| Ascorbic acid | 3 | 120 |
| K-sorbate | 0.1 | 4 |
| Acetic acid | 0.6 | 24 |
| Bixin crystals 90% | 15 | 600 |
| Citric acid to pH 3.0 - 3.5 | | |

### Ball milling:

The color suspension was milled on a LabStar ball mill (Netzsch, Germany) in two steps.
The particle size of the milled bixin crystals was measured on a Malvern Mastersizer.

During the first milling step the mill was equipped with 450 ml of beads (SiliBeads ZY, Sigmund Lindner GmbH, Germany) with diameters in the range of 0.6-0.8 mm and a 0.2 mm slit on the mill.

Milling was continued until a particle size (d (4,3)) of 0.73 microns was obtained.

The beads were then exchanged with 450 ml of smaller beads (SiliBeads ZY, Sigmund Lindner GmbH, Germany) with diameters in the range of 0.3-0.4 mm and a 0.1 mm slit on the mill.

Milling was continued until a particle size (d (4,3)) of 0.28 microns was obtained.
After storage for 3 months at 4 °C a mean particle size d(4,3) of 0.28 microns was measured.

The viscosity of the composition was still very low after milling and this was still the case after storage for 3 months at 4 °C.

Bixin strength was measured: 13.0 %.

0.0385 g of the color formulation was dissolved in 250 ml of a standard soft drink medium with a pH value of 3.0 and measured on a Minolta Chromameter, CT310.

Chroma was measured at 90.18, which is a high value.

### Example 3: Composition with beta-carotene and polysorbate (component (1) of the claimed composition)

### Composition of milled suspension:

| Ingredient | % | Amount (g) |
|---|---|---|
| Dem. water | 66.3 | 2652 |
| Polysorbate 80 | 15 | 600 |
| Ascorbic acid | 3 | 120 |
| K-sorbate | 0.1 | 4 |
| Acetic acid | 0.6 | 24 |
| Beta-carotene crystals | 15 | 600 |
| Citric acid to pH 3.0 - 3.5 | | |

### Ball milling:

The color suspension was milled on a LabStar ball mill (Netzsch, Germany) in two steps.

The particle size of the milled beta-carotene crystals was measured on a Malvern Mastersizer.

During the first milling step the mill was equipped with 450 ml of beads (SiliBeads ZY, Sigmund Lindner GmbH, Germany) with diameters in the range 0.6-0.8 mm and a 0.2 mm slit on the mill.

Milling was continued until all particles with a diameter of above 10 microns had disappeared.

The beads were then exchanged with 450 ml of smaller beads (SiliBeads ZY, Sigmund Lindner GmbH, Germany) with diameters in the range of 0.3-0.4 mm.

Milling was continued until a particle size (d (4,3)) of less than 0.30 microns was obtained.

The viscosity of the composition was after milling still very low.

Beta-carotene strength was measured: around 12-13%.

### Example 4: Composition with crystalline bixin and polysorbate (component (1) of the claimed composition)

| Ingredient | % | Amount (g) |
|---|---|---|
| Dem. Water | 63.3 | 2476 |
| Polysorbate 80 | 11 | 440 |
| Ascorbic acid | 4 | 160 |
| K-benzoate | 0,1 | 4 |
| Acetic acid 30 % | 0.6 | 80 |
| Bixin crystals 90 % | 21 | 840 |
| Citric acid to pH 3.0 - 3.5 | | |

### Ball milling:

The color suspension was milled on a LabStar ball mill (Netzsch, Germany) in two steps.

The particle size of the milled bixin crystals was measured on a Malvern Mastersizer.

During the first milling step the mill was equipped with 450 ml of beads (SiliBeads ZY, Sigmund Lindner GmbH, Germany) with diameters in the range of 0.6-0.8 mm and a 0.2 mm slit on the mill.

Milling was continued until a particle size (d (v,0.5)) of 0.42 microns was obtained.

The beads were then exchanged with 450 ml of smaller beads (SiliBeads ZY, Sigmund Lindner GmbH, Germany) with diameters in the range of 0.3-0.4 mm and a 0.1 mm slit on the mill.

Milling was continued until a particle size (d (v,0.5)) of 0.25 microns was obtained. After storage for 3 months at 4 °C a mean particle size d(v,0.5) of 0.28 microns was measured.

The viscosity of the composition was very low also after milling. This was still the case after storage for 3 months at 4 °C

### Example 5: Composition with beta-carotene and polysorbate (component (1) of the claimed composition)

### Composition of milled suspension (Recipe 20 % beta-carotene):

| Ingredient | % | Amount (g) |
|---|---|---|
| Dem water | 54.3 | 2118 |
| Polysorbate 80 | 20 | 800 |
| Ascorbic acid | 4 | 160 |
| K-sorbate | 0.1 | 4 |
| Acetic acid 30 % | 0.6 | 80 |
| Crystalline beta-carotene | 21 | 840 |
| Citric acid to pH 3.0 - 3.5 | | |

### Ball milling:

The color suspension was milled on a LabStar ball mill (Netzsch, Germany) in two steps.

The particle size of the milled beta-carotene crystals was measured on a Malvern Mastersizer.

During the first milling step the mill was equipped with 450 ml of beads (SiliBeads ZY, Sigmund Lindner GmbH, Germany) with diameters in the range 0.6-0.8 mm and a 0.2 mm slit on the mill.

Milling was continued until all particles with a diameter of above 10 microns had disappeared.

The beads were then exchanged with 450 ml of smaller beads (SiliBeads ZY, Sigmund Lindner GmbH, Germany) with diameters in the range of 0.3-0.4 mm.

Milling was continued until a particle size (d (v,4,3)) of 0.28 microns was obtained.

After storage for 3 months at 4 °C a mean particle size d(v,4,3) of 0.29 microns was measured.

The viscosity of the composition was still very low after milling. This was still the case after storage for 3 months at 4 °C

### Example 6: Composition with turmeric and nOSA starch (component (2) of the claimed composition)

4 kg of a suspension consisting of 27.3 wt% of nOSA modified starch (HiCap 100, National Starch, E1450), 9.1 wt% turmeric powder (95 % strength, Synthite, India), 0.1 % potassium sorbate, 4.2 % acetic acid and 59.2 wt% demineralized water was prepared. The suspension comprised 8.6% curcumin. When the starch had been dissolved and the turmeric powder had been sufficiently wetted the suspension was run through a pilot scale ball mill (LabStar, Netzsch, Germany) for 4 hours. The first hour the milling was performed using 450 ml 0.6-0.8 mm beads and a 0.2 mm screen, the last 3 hours the milling was done using 450 ml 0.2-0.3 mm beads and a 0.1 mm screen.

When the milling had been completed a mean particle size (d4,3) of 0.34 microns was measured on a Malvern MasterSizer.

### Example 7: nOSA coated curcumin in combination with polysorbate coated carotenoid - Production of colored pasta sauce and stability study

Two batches of 3500 grams of pasta sauce were prepared for the test:

| Ingredient | Grams |
|---|---|
| Water | 1524.66 |
| Trisodium phosphate | 31.63 |
| Disodium phosphate | 15.56 |
| Salt | 40.25 |
| Whey powder | 878.50 |
| Cheddar Cheese | 735.00 |
| Butter | 227.50 |
| Lactic acid liquid | 26.25 |
| Total | 3500 |

The ingredients were blended, pH adjusted to 5.4-5.6 citric acid and homogenized in a 2 stage homogenizer (2^{nd} stage: 2 MPa, 1^{st} stage: 6 MPa).

The homogenized pasta sauce was split into batches of 1000 grams.

Color was added to each batch before spray drying_as appears in the table below. The values for dried product are based on calculations assuming 45 % solids in the dried product.

| Sample No | Bixin formulation prepared according to example 4, % | | Curcumin formulation prepared according to example 6, % | |
|---|---|---|---|---|
| | % bixin formulation in liquid sauce | % bixin formulation in dried product (calculated) | % curcumin formulation in liquid sauce | % curcumin formulation in dried product (calculated) |
| SD 411 | 0.026 | 0.0587 | 0.012 | 0.0271 |
| SD 412 | 0.034 | 0.0751 | 0.013 | 0.0298 |
| SD 413 | 0.0165 | 0.0366 | 0.1087 | 0.2415 |
| SD 414 | 0.0165 | 0.0366 | 0.0543 | 0.1207 |
| SD 415 | 0.0165 | 0.0366 | 0.0272 | 0.0604 |

The pasta sauce was spray dried on a FSD Minor spray dryer (GEA Niro A/S)

The spray dried powders were measured colorimetrically. They were then put into plastic bags in foil bags and stored for 8 weeks at 20 C in the dark. After 8 weeks they were colorimetrically tested again (see table below)

As appears from the table only insignificant changes had occurred after 8 week's storage at 20 °C.

### Colorimetric Data of Spray Dried Cheese Powder

Storage Conditions: 8 weeks Ambient 20°C, Dark packaged in Plastic bag in Foil bag Colorimetric Instrument: Minolta CM-3700d (D65, 10°, %Reflectance)

| **SD 410** | L* | a* | b* | C* | h° | ΔL* | ΔC* | ΔH* | **ΔE 2000** |
|---|---|---|---|---|---|---|---|---|---|
| Week 1 | 76.82 | 21.64 | 47.20 | 51.92 | 65.37 | 0.00 | 0.00 | 0.00 | 0.00 |
| Week 8 | 77.60 | 20.10 | 46.27 | 50.45 | 66.52 | 0.56 | 0.45 | 0.71 | 1.00 |

| **SD 411** | L* | a* | b* | C* | h° | ΔL* | ΔC* | ΔH* | **ΔE 2000** |
|---|---|---|---|---|---|---|---|---|---|
| Week 1 | 77.28 | 21.87 | 38.59 | 44.36 | 60.46 | 0.00 | 0.00 | 0.00 | 0.00 |
| Week 8 | 77.86 | 20.68 | 36.93 | 42.33 | 60.75 | 0.41 | 0.69 | 0.16 | 0.82 |

| **SD 412** | L* | a* | b* | C* | h° | ΔL* | ΔC* | ΔH* | **ΔE 2000** |
|---|---|---|---|---|---|---|---|---|---|
| Week 1 | 75.69 | 24.54 | 38.63 | 45.77 | 57.57 | 0.00 | 0.00 | 0.00 | 0.00 |
| Week 8 | 76.63 | 22.94 | 36.55 | 43.15 | 57.89 | 0.68 | 0.87 | 0.17 | 1.12 |

| **SD 413** | L* | a* | b* | C* | h° | ΔL* | ΔC* | ΔH* | **ΔE 2000** |
|---|---|---|---|---|---|---|---|---|---|
| Week 1 | 84.51 | 7.29 | 47.04 | 47.60 | 81.19 | 0.00 | 0.00 | 0.00 | 0.00 |
| Week 8 | 84.54 | 5.84 | 46.64 | 47.00 | 82.86 | 0.02 | 0.19 | 0.98 | 1.00 |

| **SD 414** | L* | a* | b* | C* | h° | ΔL* | ΔC* | ΔH* | **ΔE 2000** |
|---|---|---|---|---|---|---|---|---|---|
| Week 1 | 83.18 | 12.19 | 43.79 | 45.46 | 74.44 | 0.00 | 0.00 | 0.00 | 0.00 |
| Week 8 | 83.52 | 10.88 | 42.03 | 43.42 | 75.49 | 0.23 | 0.68 | 0.59 | 0.93 |

| **SD 415** | L* | a* | b* | C* | h° | ΔL* | ΔC* | ΔH* | **ΔE 2000** |
|---|---|---|---|---|---|---|---|---|---|
| Week 1 | 82.77 | 14.80 | 41.08 | 43.66 | 70.19 | 0.00 | 0.00 | 0.00 | 0.00 |
| Week 8 | 83.41 | 13.65 | 38.95 | 41.27 | 70.69 | 0.43 | 0.82 | 0.27 | 0.97 |

## Claims

1. A water-dispersible composition comprising:
(1) A water-dispersible composition comprising a dispersion of at least 2% (w/w) of carotenoid natural hydrophobic pigment in the form of solid particles of an average size of at the most 1 µm, when measured as D(4,3), with a Malvern MasterSizer, said solid particles being dispersed in an aqueous phase comprising polysorbate as a water-soluble emulsifier and
wherein the ratio (w/w) of polysorbate emulsifier: carotenoid pigment is in the range of 1:10 to 4:1; and
wherein the carotenoid natural hydrophobic pigment is at least one pigment selected from the group consisting of: bixin, β-carotene, α-carotene, apocarotenals, canthaxanthin, saffron, crocin, capsanthin, capsorubin, lutein, astaxanthin, rubixanthin, violaxanthin, rhodoxanthin and lycopene; in combination with
(2) A water-dispersible formulation comprising a curcumin pigment.

2. The water-dispersible composition according to claim 1, wherein the carotenoid natural hydrophobic pigment is at least one pigment selected from the group consisting of: bixin and β-carotene.

3. The water-dispersible composition of claim 2, wherein the solid particles have an average size of at the most 0.4 µm, when measured as D(4,3), with a Malvern MasterSizer.

4. The water-dispersible composition according to any of the preceding claims, wherein the ratio (w/w) of polysorbate emulsifier:carotenoid pigment is in the range of 1:4 to 3:1.

5. The water-dispersible composition according to any of the preceding claims, wherein the dispersion comprises at least 5% (w/w) of carotenoid natural hydrophobic pigment in the form of solid particles of an average size of at the most 1 µm, when measured as D(4,3), with a Malvern MasterSizer.

6. The water-dispersible composition according to of any of the preceding claims, wherein the polysorbate is polysorbate 20, polysorbate 40, polysorbate 60, polysorbate 65, polysorbate 80 or a mixture of these.

7. The water-dispersible composition according to of any of the preceding claims, wherein the polysorbate water-soluble emulsifier is present in the composition in an amount of at least 5% (w/w).

8. The water-dispersible composition according to of any of the preceding claims, wherein at least 80% (w/w) of the total amount of emulsifier in the water-dispersible composition is the polysorbate emulsifier.

9. The water-dispersible composition according to of any of the preceding claims, wherein the pH of the water-dispersible composition is a pH from 2 to 5.

10. The water-dispersible composition according to of any of the preceding claims, wherein the solid particles are being dispersed in the aqueous phase in the absence of a hydrocolloid.

11. The water-dispersible composition according to of any of the preceding claims, wherein the solid particles of claim 1 comprise carotenoid crystals covered with polysorbate and the solid particles comprise less than 0.5% (w/w) of fat, oil or wax.

12. Use of a water-dispersible composition according to of any of the preceding claims for the manufacture of an edible product or a pharmaceutical product.

13. The use according to claim 12, wherein the water-dispersible composition is used as a colorant for a food product, a feed product or a pharmaceutical product.

14. The use according to claim 13, wherein the food product is a beverage, wine gum, marmelade, jam, sugar confectionary, panned chocolate lentils, sausage casings, pasta, macaroni, cheese, prepared food, a sauce or extruded foods.

15. An edible product comprising a water-dispersible composition according to any of the claims 1 to 11.

16. A method for preparing a water-dispersible pigment composition according to any of the claims 1 to 11, the method comprising preparing a dispersion of at least 2% (w/w) of carotenoid natural hydrophobic pigment in the form of solid particles by comminuting the pigment in an aqueous phase comprising polysorbate as a water-soluble emulsifier, to obtain a dispersion comprising the pigment in the form of solid particles of an average size of at the most 1 µm, and wherein the ratio of polysorbate emulsifier:carotenoid pigment is in a range of 1:10 to 4:1.

17. The water-dispersible composition according to any of claims 1 to 11, wherein the water-dispersible composition (2) of claim 1 comprising curcumin pigment is: a water-dispersible formulation comprising at least 1 % (w/w) of curcumin pigment in the form of solid particles of an average size of at the most 10 µm, said solid particles being dispersed in an aqueous phase comprising a dispersant agent.

18. The water-dispersible composition according to claim 17, wherein the dispersant agent is not polysorbate.

19. The water-dispersible composition according to claim 17, wherein the dispersant agent is gum arabic, locust bean gum, pectin, beet-pectin, gelatin or preferably starch.

20. The water-dispersible composition according to claim 19, wherein the starch is a starch sodium octenyl succinate derivative.

21. The water-dispersible composition according to any of claims 17 to 20, wherein the ratio (w/w) of dispersant agent:curcumin pigment is in the range of 1:1000 to 1000:1.

## Patentansprüche

1. Wasserdispergierbare Zusammensetzung, umfassend:
(1) eine wasserdispergierbare Zusammensetzung, die eine Dispersion von mindestens 2 % (Gew./Gew.) natürlichem hydrophobem Carotinoidpigment in der Form von festen Partikeln einer durchschnittlichen Größe von höchstens 1 µm bei Messung als D(4,3) mit einem Malvern MasterSizer umfasst,
wobei die festen Partikel in einer wässrigen Phase dispergiert werden, die Polysorbat als einen wasserlöslichen Emulgator umfasst und
wobei das Verhältnis (Gew./Gew.) von Polysorbat-Emulgator:Carotinoidpigment im Bereich von 1:10 bis 4:1 liegt; und
wobei das natürliche hydrophobe Carotinoidpigment mindestens ein Pigment ist, das aus der Gruppe ausgewählt ist, die aus Folgenden besteht: Bixin, β-Carotin, α-Carotin, Apocarotinale, Canthaxanthin, Safran, Crocin, Capsanthin, Capsorubin, Lutein, Astaxanthin, Rubixanthin, Violaxanthin, Rhodoxanthin und Lycopin;
in Kombination mit
(2) einer wasserdispergierbaren Formulierung, die ein Curcuminpigment umfasst.

2. Wasserdispergierbare Zusammensetzung nach Anspruch 1, wobei das natürliche hydrophobe Carotinoidpigment mindestens ein Pigment ist, das aus der Gruppe ausgewählt ist, die aus Folgenden besteht: Bixin und β-Carotin.

3. Wasserdispergierbare Zusammensetzung nach Anspruch 2, wobei die festen Partikel eine durchschnittliche Größe von höchstens 0,4 µm bei Messung als D(4,3) mit einem Malvern MasterSizer aufweisen.

4. Wasserdispergierbare Zusammensetzung nach einem der vorstehenden Ansprüche, wobei das Verhältnis (Gew./Gew.) von Polysorbat-Emulgator:Carotinoidpigment im Bereich von 1:4 bis 3:1 liegt.

5. Wasserdispergierbare Zusammensetzung nach einem der vorstehenden Ansprüche, wobei die Dispersion mindestens 5 % (Gew./Gew.) natürliches hydrophobes Carotinoidpigment in der Form von festen Partikeln einer durchschnittlichen Größe von höchstens 1 µm bei Messung als D(4,3) mit einem Malvern MasterSizer umfasst.

6. Wasserdispergierbare Zusammensetzung nach einem der vorstehenden Ansprüche, wobei das Polysorbat Polysorbat 20, Polysorbat 40, Polysorbat 60, Polysorbat 65, Polysorbat 80 oder eine Mischung von diesen ist.

7. Wasserdispergierbare Zusammensetzung nach einem der vorstehenden Ansprüche, wobei der wasserlösliche Polysorbat-Emulgator in der Zusammensetzung in einer Menge von mindestens 5 % (Gew./Gew.) vorliegt.

8. Wasserdispergierbare Zusammensetzung nach einem der vorstehenden Ansprüche, wobei der Polysorbat-Emulgator mindestens 80 % (Gew./Gew.) der Gesamtmenge an Emulgator in der wasserdispergierbaren Zusammensetzung ausmacht.

9. Wasserdispergierbare Zusammensetzung nach einem der vorstehenden Ansprüche, wobei der pH-Wert der wasserdispergierbaren Zusammensetzung ein pH-Wert von 2 bis 5 ist.

10. Wasserdispergierbare Zusammensetzung nach einem der vorstehenden Ansprüche, wobei die festen Partikel in der wässrigen Phase in Abwesenheit eines Hydrokolloids dispergiert werden.

11. Wasserdispergierbare Zusammensetzung nach einem der vorstehenden Ansprüche, wobei die festen Partikel aus Anspruch 1 Carotinoidkristalle, die mit Polysorbat überzogen sind, umfassen und die festen Partikel weniger als 0,5 % (Gew./Gew.) Fett, Öl oder Wachs umfassen.

12. Verwendung einer wasserdispergierbaren Zusammensetzung nach einem der vorstehenden Ansprüche zur Herstellung eines essbaren Produktes oder eines pharmazeutischen Produktes.

13. Verwendung nach Anspruch 12, wobei die wasserdispergierbare Zusammensetzung als ein Farbmittel für ein Nahrungsmittel, ein Futtermittel oder ein pharmazeutisches Produkt verwendet wird.

14. Verwendung nach Anspruch 13, wobei das Nahrungsmittel ein Getränk, Weingummi, eine Marmelade, Konfitüre, Süßwaren, dragierte Schokoladenlinsen, eine Wursthaut, Teigwaren, Makkaroni, ein Käse, Fertiggericht, eine Soße oder ein extrudiertes Lebensmittel ist.

15. Essbares Produkt, umfassend eine wasserdispergierbare Zusammensetzung nach einem der Ansprüche 1 bis 11.

16. Verfahren zum Herstellen einer wasserdispergierbaren Pigmentzusammensetzung nach einem der Ansprüche 1 bis 11, wobei das Verfahren das Herstellen einer Dispersion aus mindestens 2 % (Gew./Gew.) natürlichem hydrophobem Carotinoidpigment in der Form von festen Partikeln durch Feinzerkleinern des Pigments in einer wässrigen Phase, die Polysorbat als einen wasserlöslichen Emulgator umfasst, um eine Dispersion zu erhalten, die das Pigment in der Form von festen Partikeln einer durchschnittlichen Größe von höchstens 1 µm umfasst, und wobei das Verhältnis von Polysorbat-Emulgator:Carotinoidpigment im Bereich von 1:10 bis 4:1 liegt.

17. Wasserdispergierbare Zusammensetzung nach einem der Ansprüche 1 bis 11, wobei die wasserdispergierbare Zusammensetzung (2) nach Anspruch 1, die Curcuminpigment umfasst, Folgendes ist:
eine wasserdispergierbare Formulierung, die mindestens 1 % (Gew./Gew.) Curcuminpigment in der Form von festen Partikeln einer durchschnittlichen Größe von höchstens 10 µm umfasst, wobei die festen Partikel in einer wässrigen Phase dispergiert werden, die ein Dispergiermittel umfasst.

18. Wasserdispergierbare Zusammensetzung nach Anspruch 17, wobei das Dispergiermittel nicht Polysorbat ist.

19. Wasserdispergierbare Zusammensetzung nach Anspruch 17, wobei das Dispergiermittel Gummi arabicum, Johannisbrotkernmehl, Pektin, Rübenpektin, Gelatine oder vorzugsweise Stärke ist.

20. Wasserdispergierbare Zusammensetzung nach Anspruch 19, wobei die Stärke ein Stärkenatriumoctenylsuccinat-Derivat ist.

21. Wasserdispergierbare Zusammensetzung nach einem der Ansprüche 17 bis 20, wobei das Verhältnis (Gew./Gew.) von Dispergiermittel:Curcuminpigment im Bereich von 1:1000 bis 1000:1 liegt.

## Revendications

1. Composition dispersible dans l'eau comprenant :
(1) une composition dispersible dans l'eau comprenant une dispersion d'au moins 2 % (en poids/poids) d'un pigment hydrophobe naturel à base de caroténoïde sous forme de particules solides d'une taille moyenne d'au plus 1 µm, quand elle est mesurée en tant que D(4,3), avec un MasterSizer Malvern, lesdites particules solides étant dispersées dans une phase aqueuse comprenant un polysorbate en tant qu'émulsifiant hydrosoluble et
dans laquelle le rapport (en poids/poids) émulsifiant de type polysorbate:pigment à base de caroténoïde est situé dans la plage allant de 1:10 à 4:1 ; et
dans laquelle le pigment hydrophobe naturel à base de caroténoïde est au moins un pigment sélectionné dans le groupe consistant en : la bixine, le β-carotène, l'a-carotène, les apocaroténals, la canthaxanthine, le safran, la crocine, la capsanthine, la capsorubine, la lutéine, l'astaxanthine, la rubixanthine, la violaxanthine, la rhodoxanthine et le lycopène ; en combinaison avec
(2) une formulation dispersible dans l'eau comprenant un pigment à base de curcumine.

2. Composition dispersible dans l'eau selon la revendication 1, dans laquelle le pigment hydrophobe naturel à base de caroténoïde est au moins un pigment sélectionné dans le groupe consistant en : la bixine et le β-carotène.

3. Composition dispersible dans l'eau selon la revendication 2, dans laquelle les particules solides présentent une taille moyenne d'au plus 0,4 µm, quand elle est mesurée en tant que D(4,3), avec un MasterSizer Malvern.

4. Composition dispersible dans l'eau selon l'une quelconque des revendications précédentes, dans laquelle le rapport (en poids/poids) émulsifiant de type polysorbate:pigment à base de caroténoïde est situé dans la plage allant de 1:4 à 3:1.

5. Composition dispersible dans l'eau selon l'une quelconque des revendications précédentes, dans laquelle la dispersion comprend au moins 5 % (en poids/poids) d'un pigment hydrophobe naturel à base de caroténoïde sous forme de particules solides d'une taille moyenne d'au plus 1 µm, quand elle est mesurée en tant que D(4,3), avec un MasterSizer Malvern.

6. Composition dispersible dans l'eau selon l'une quelconque des revendications précédentes, dans laquelle le polysorbate est le polysorbate 20, le polysorbate 40, le polysorbate 60, le polysorbate 65, le polysorbate 80 ou un mélange de ceux-ci.

7. Composition dispersible dans l'eau selon l'une quelconque des revendications précédentes, dans laquelle l'émulsifiant hydrosoluble de type polysorbate est présent dans la composition en une quantité d'au moins 5 % (en poids/poids).

8. Composition dispersible dans l'eau selon l'une quelconque des revendications précédentes, dans laquelle au moins 80 % (en poids/poids) de la quantité totale d'émulsifiant dans la composition dispersible dans l'eau est l'émulsifiant de type polysorbate.

9. Composition dispersible dans l'eau selon l'une quelconque des revendications précédentes, dans laquelle le pH de la composition dispersible dans l'eau est un pH allant de 2 à 5.

10. Composition dispersible dans l'eau selon l'une quelconque des revendications précédentes, dans laquelle les particules solides sont dispersées dans la phase aqueuse en l'absence d'un hydrocolloïde.

11. Composition dispersible dans l'eau selon l'une quelconque des revendications précédentes, dans laquelle les particules solides selon la revendication 1 comprennent des cristaux de caroténoïde recouverts de polysorbate et les particules solides comprennent moins de 0,5 % (en poids/poids) d'une graisse, d'une huile ou d'une cire.

12. Utilisation d'une composition dispersible dans l'eau selon l'une quelconque des revendications précédentes pour la préparation d'un produit comestible ou d'un produit pharmaceutique.

13. Utilisation selon la revendication 12, dans laquelle la composition dispersible dans l'eau est utilisée comme colorant pour une denrée alimentaire, un produit alimentaire pour animaux ou un produit pharmaceutique.

14. Utilisation selon la revendication 13, dans laquelle la denrée alimentaire est une boisson, une gomme à vin, une marmelade, une confiture, une confiserie au sucre, les lentilles au chocolat enrobées, les boyaux à saucisse, les pâtes, les macaronis, un fromage, un aliment préparé, une sauce ou les aliments extrudés.

15. Produit comestible comprenant une composition dispersible dans l'eau selon l'une quelconque des revendications 1 à 11.

16. Procédé de préparation d'une composition de pigment dispersible dans l'eau selon l'une quelconque des revendications 1 à 11, le procédé comprenant la préparation d'une dispersion d'au moins 2 % (en poids/poids) d'un pigment hydrophobe naturel à base de caroténoïde sous forme de particules solides par le broyage du pigment dans une phase aqueuse comprenant un polysorbate en tant qu'émulsifiant hydrosoluble, afin d'obtenir une dispersion comprenant le pigment sous forme de particules solides d'une taille moyenne d'au plus 1 µm, et dans lequel le rapport émulsifiant de type polysorbate: pigment à base de caroténoïde est situé dans une plage allant de 1:10 à 4:1.

17. Composition dispersible dans l'eau selon l'une quelconque des revendications 1 à 11, dans laquelle la composition dispersible dans l'eau (2) selon la revendication 1 comprenant un pigment à base de curcumine est :
une formulation dispersible dans l'eau comprenant au moins 1 % (en poids/poids) d'un pigment à base de curcumine sous forme de particules solides d'une taille moyenne d'au plus 10 µm, lesdites particules solides étant dispersées dans une phase aqueuse comprenant un agent dispersant.

18. Composition dispersible dans l'eau selon la revendication 17, dans laquelle l'agent dispersant n'est pas un polysorbate.

19. Composition dispersible dans l'eau selon la revendication 17, dans laquelle l'agent dispersant est une gomme arabique, une gomme de caroube, une pectine, une pectine de betterave, une gélatine ou de préférence un amidon.

20. Composition dispersible dans l'eau selon la revendication 19, dans laquelle l'amidon est un dérivé d'octènylsuccinate de sodium d'amidon.

21. Composition dispersible dans l'eau selon l'une quelconque des revendications 17 à 20, dans laquelle le rapport (en poids/poids) agent dispersant:pigment à base de curcumine est situé dans la plage allant de 1:1 000 à 1 000:1.
